# EUROPÄISCHE PATENTSCHRIFT

(11) **EP 2 271 481 B1**
(45) Veröffentlichungstag und Bekanntmachung des Hinweises auf die Patenterteilung: **18.03.2015**
(21) Anmeldenummer: 09777191.9
(22) Anmeldetag: 14.07.2009
(51) Int. Cl.: B29C 73/16, B29L 30/00

(54) **VORRICHTUNG ZUM EINBRINGEN VON LUFT UND/ODER ABDICHTMITTEL IN EINEN REIFEN**
DEVICE FOR INTRODUCING AIR AND/OR SEALANT INTO A TIRE
DISPOSITIF D'APPORT D'AIR ET/OU D'UN MOYEN D'ÉTANCHÉITÉ DANS UN BANDAGE DE ROUE

(30) Priorität: 16.07.2008 DE 102008033477
(43) Veröffentlichungstag der Anmeldung: 12.01.2011
(73) Patentinhaber: Sumitomo Rubber Industries, Ltd., Hyogo-ken (JP)
(72) Erfinder: ECKHARDT, Arnold, 63691 Randstadt (DE)
(74) Vertreter: Thul, Stephan
(86) Internationale Anmeldenummer: PCT/EP2009/005122
(87) Internationale Veröffentlichungsnummer: WO 2010/006771

(56) Entgegenhaltungen:
- EP-A- 1 358 996
- EP-A- 1 894 707
- WO-A-2008/075719
- DE-A1- 10 106 468
- US-A1- 2005 056 358
- US-A1- 2008 098 855

## Beschreibung

Die vorliegende Erfindung betrifft eine Vorrichtung zum Einbringen von Luft und/oder Abdichtmittel in einen Reifen, insbesondere Kraftfahrzeugreifen, mit einem Behälter für das Abdichtmittel, insbesondere eine Flasche, einem mit dem Behälter verbundenen oder verbindbaren Druckerzeugungsmittel, insbesondere eine elektrische Pumpe oder ein Kompressor, zum Entleeren des Behälters, gegebenenfalls einem elektrischen Anschlusskabel für die Druckerzeugungsmittel, welches an seinem Ende ein Verbindungselement, insbesondere Stecker, aufweist zur Verbindung des Anschlusskabels mit einer Stromversorgung, insbesondere dem Zigarrenanzünder eines Kraftfahrzeuges, einem mit dem Behälter verbundenen oder verbindbaren Schlauch für die Luft und/oder das Abdichtmittel, dessen anderes Ende mit dem zu befüllenden Reifen verbindbar ist und einem Gehäuse zur Aufnahme mindestens eines Teils der Vorrichtungsbestandteile, wobei der Behälter in Gebrauchslage der Vorrichtung liegend im Gehäuse angeordnet ist.

Derartige Vorrichtungen werden mittlerweile häufig als sogenannte Pannensets als Ersatz für Reserveräder verwendet. Bei bekannten derartigen Vorrichtungen werden der Behälter und das Gehäuse als separate Einheiten mitgeführt, wobei das Druckerzeugungsmittel im Gehäuse angeordnet ist. Der Behälter weist an einer am Behälter ausgebildeten Austrittsöffnung für das Abdichtmittel ein Gewinde auf. Um die Vorrichtung in Betrieb nehmen zu können, muss der Behälter mit nach unten weisender Austrittsöffnung an einer in Gebrauchslage des Gehäuses oben liegenden Aufnahme an der Außenseite des Gehäuses, an der ein entsprechendes

Gegengewinde ausgebildet ist, befestigt werden. Dadurch ist die Handhabung der Vorrichtung erschwert. Zudem verlängert sich dadurch die Zeitdauer für die Behebung einer Reifenpanne. Dies ist insbesondere dann problematisch, wenn eine Reifenpanne in einem Gefahrenbereich, beispielsweise in einem Bereich mit hohem Verkehrsaufkommen, auftritt, denn dann erhöht sich mit der Aufenthaltsdauer des Kraftfahrzeugführers im Gefahrenbereich auch dessen Gefährdungspotential. Darüber hinaus wird bei derartigen bekannten Vorrichtungen relativ viel Platz, beispielsweise im Kofferraum eines Kraftfahrzeugs, zur Mitführung des Gehäuses einerseits und des Behälters andererseits benötigt.

Die US 2005/0056358 A1 offenbart eine Vorrichtung gemäß dem Oberbegriff des Anspruchs 1. Weiterer Stand der Technik ist aus EP 1 894 707 A1, US 2008/0098855 A1, DE 101 06 468 A1, WO 2008/075719 A1 und EP 1 358 996 A1 bekannt.

Der Erfindung liegt die Aufgabe zugrunde, eine Vorrichtung zum Einbringen von Luft und/oder Abdichtmittel in einen Reifen anzugeben, bei der in verbesserter Weise sichergestellt ist, dass beim bestimmungsgemäßen Gebrauch der Vorrichtung zum Einbringen von Abdichtmittel der das Abdichtmittel enthaltende Behälter vollständig entleert wird.

Die Lösung dieser Aufgabe erfolgt durch die Merkmale des Anspruchs 1. Vorteilhafte Ausführungsformen der Erfindung sind der Beschreibung, den Zeichnungen sowie den Unteransprüchen entnehmbar.

Durch die liegende Anordnung des Behälters mit dem Abdichtmittel lässt sich eine kompakte Vorrichtung realisieren. Insbesondere lässt sich eine Vorrichtung mit besonders flachem Gehäuse realisieren, bei dem alle wesentlichen Komponenten bzw. Bauteile im Gehäuse selbst unterbringbar sind. Die Vorrichtung eignet sich daher besonders gut zum Mitführen in einem Kraftfahrzeug, beispielsweise im Kofferraum, da diese aufgrund ihrer kompakten Bauform wenig Platz benötigt.

Erfindungsgemäß ist eine Austrittsöffnung für das Abdichtmittel am Behälter angeordnet, die sich in Gebrauchslage des Behälters unterhalb des Behälterbodens befindet. Es wird damit sichergestellt, dass beim bestimmungsgemäßen Gebrauch der Vorrichtung zum Einbringen von Abdichtmittel in einen Reifen der das Abdichtmittel enthaltende Behälter vollständig entleert wird, da aufgrund der unterhalb des Behälterbodens angeordneten Austrittsöffnung praktisch kein Abdichtmittelrest am Behälterboden verbleibt, sondern vollständig über die Austrittsöffnung aus dem Behälter ausströmt.

Nach einer weiteren Ausgestaltung der Erfindung weist der Behälter einen abgekröpften Bereich auf, an dem die Austrittsöffnung angeordnet ist. Damit kann in vorteilhafter Weise eine unterhalb des Behälterbodens liegende Austrittsöffnung realisiert werden.

Besonders vorteilhaft ist es, wenn der Behälter in Gebrauchsstellung derart liegend im Gehäuse angeordnet ist, dass sich der abgekröpfte Bereich am Gehäuseboden abstützt und der Behälterboden in einem Abstand, der der Höhe der Abkröpfung entspricht, parallel zum Gehäuseboden verläuft. Dadurch wird unter dem Behälter ein Freiraum geschaffen, der zur Aufnahme von Elementen der Vorrichtung dienen kann, beispielsweise zur Aufnahme des Schlauchs zur Befüllung des Reifens. Abstützmittel, wie Stege oder dergleichen, können dabei zur Abstützung des Behälterbodens gegenüber dem Gehäuseboden dienen.

Weiter bevorzugt ist es, wenn die dem Behälterboden gegenüberliegende Behälterwand mit geringem Abstand zu der dem Gehäuseboden gegenüberliegenden Gehäusewand angeordnet ist. Dadurch wird der Behälter einerseits von dem Gehäuse sicher eingefasst, so dass keine oder nur wenige zusätzliche Halterungen für den Behälter benötigt werden. Andererseits lässt sich dadurch ein besonders flaches Gehäuse realisieren.

Nach einer Weiterbildung der Erfindung weist der Behälter im abgekröpften Bereich eine Zutrittsöffnung für Luft auf. Dabei ist die Zutrittsöffnung derart im abgekröpften Bereich angeordnet, dass sich diese oberhalb der Austrittsöffnung für das Abdichtmittel befindet, wenn der Behälter in Gebrauchslage angeordnet ist. Dadurch kann das Abdichtmittel in vorteilhafter Weise vollständig oder nahezu vollständig aus dem Behälter mittels Druckluft, die über die Zutrittsöffnung dem Behälter zugeführt wird, entnommen werden.

Nach einer weiteren Ausgestaltung der Erfindung ist eine Entnahmeeinheit bevorzugt lösbar mit dem Behälter verbunden, die einen ersten Anschlussstutzen für die Entnahme des Abdichtmittels aus dem Behälter und einen zweiten Anschlussstutzen zur Zuführung von Druckluft aufweist. Die Entnahmeeinheit kann insbesondere derart ausgebildet sein, dass sie sich auf den Behälter aufschrauben lässt. Zudem kann der erste Anschlussstutzen insbesondere um etwa 180° versetzt zum zweiten Anschlussstutzen an der Entnahmeeinheit angeordnet sein. Dadurch lässt sich die Entnahmeeinheit an dem Behälter so fixieren, dass ein Anschlussstutzen nach unten und der andere nach oben weist. Der untere wird zur Entnahme, der obere zur Druckluftzufuhr verwendet. Damit wird eine vollständige Entleerung begünstigt.

Des Weiteren ist bevorzugt eine insbesondere gabelförmige Halterung für die Entnahmeeinheit vorgesehen, so dass der mit der Entnahmeeinheit verbundene Behälter mittels der gabelförmigen Halterung am Gehäuse fixiert werden kann. Damit lässt sich eine besonders kostengünstige und sichere Halterung für die Entnahmeeinheit und den damit verbundenen Behälter realisieren. Darüber hinaus wird dadurch der im Bereich der Entnahmeeinheit ohnehin vorhandene Platz sinnvoll ausgenutzt. Dies ist in besonderem Maße dann der Fall, wenn der Behälter, wie weiter oben bereits beschrieben ist, eine Abkröpfung im Bereich seiner Austrittsöffnung aufweist. Somit wird kein zusätzlicher Raum im Gehäuse für die Halterung des Behälters benötigt, so dass die kompakte Gehäuseform erhalten bleiben kann.

Nach noch einer Weiterbildung der Erfindung hat das Gehäuse einen Deckel zum Einbringen und zum Entnehmen des Behälters. Der Behälter kann somit durch Öffnen und Schließen des Deckels relativ einfach aus dem Gehäuse entfernt werden, selbst wenn bei geschlossenem Deckel die Gehäusewände, wie zuvor beschrieben, den Behälter eng einfassen, weil sie sehr nahe an die entsprechenden Behälterwände anstehen.

Weiter bevorzugt hat das Gehäuse ein Aufnahmefach zwischen dem Behälterboden und dem Gehäuseboden für den Schlauch zur Befüllung eines Reifens mit Abdichtmittel. Damit lässt sich einerseits der Schlauch sicher im Gehäuse aufbewahren und andererseits ist dieser für einen Benutzer leicht zugänglich und schnell auffindbar. Dies sind insbesondere bei einer Reifenpanne in einem Gefahrenbereich wichtige Aspekte, weil durch die leichte Zugänglichkeit und der Möglichkeit des schnellen Auffindens der Benutzer schneller in die Lage versetzt wird, die Reifenpanne zu beheben, so dass die Verweildauer im Gefahrenbereich verkürzt und dadurch das Gefährdungspotential für den Benutzer gesenkt wird.

Im Aufnahmefach für den Schlauch kann auch eine Halterung für ein Schlauchanschlussstück zum Anschließen des Schlauches an einen Reifen, insbesondere eine sogenannte VG8-Verschraubung, vorgesehen sein. Dadurch ist das Schlauchanschlussstück ohne großes Suchen schnell auffindbar, was wiederum auch zu einer Verkürzung der Zeit zur Behebung einer Reifenpanne beiträgt.

Nach einer weiteren Ausgestaltung der Erfindung hat das Gehäuse einen über einen Deckel verschließbaren Aufnahmeraum für das elektrische Anschlusskabel und auf der Innenseite des Deckels eine, insbesondere T-förmige, Halterung zum Aufwickeln des Anschlusskabels. Damit ist auch das elektrische Anschlusskabel in einfacher und sicherer Weise im Gehäuse verstaut und relativ schnell zur Behebung einer Reifenpanne greifbar.

Das Druckerzeugungsmittel, insbesondere die Pumpe oder der Kompressor, ist bevorzugt über einen ersten Luftzuführschlauch mit dem Behälter verbunden oder verbindbar, um dem Behälter Druckluft zuzuführen. Die Druckluft wird dazu verwendet, das Abdichtmittel aus dem Behälter zu drücken und dem abzudichtenden Reifen zuzuführen. Anschließend kann der Reifen auf diesem Wege aufgeblasen werden.

Weiter bevorzugt ist das Druckerzeugungsmittel, insbesondere die Pumpe oder der Kompressor, mit einem zweiten Luftzuführschlauch verbunden oder verbindbar, über welchen ein Reifen direkt mit Luft aufgeblasen werden kann. Die Vorrichtung kann dadurch auch unabhängig von einer Panne zur Einstellung des vorgeschriebenen Luftdrucks eines Reifens verwendet werden.

Besonders bevorzugt ist es, wenn die Vorrichtung ferner ein Umschaltventil zum Umschalten des vom Kompressor erzeugten Luftstroms zwischen dem ersten Luftzuführschlauch und dem zweiten Luftzuführschlauch aufweist, so dass auf einfache Weise wahlweise die Vorrichtung zum direkten Aufpumpen eines Reifens oder zum Abdichten und anschließenden Aufpumpen des Reifens verwendbar ist.

Nachfolgend wird die Erfindung rein beispielhaft anhand vorteilhafter Ausführungsformen und unter Bezugnahme auf die beigefügten Zeichnungen beschrieben. Es zeigen, jeweils in schematischer Darstellung,
- Fig. 1: eine Draufsicht auf eine erfindungsgemäße Vorrichtung,
- Fig. 2: eine Seitenansicht der in Fig. 1 mit A gekennzeichneten Seite der Vorrichtung,
- Fig. 3: eine Seitenansicht der in Fig. 1 mit B gekennzeichneten Seite der Vorrichtung,
- Fig. 4: eine Vorderansicht eines Behälters für das Abdichtmittel,
- Fig. 5: eine Seitenansicht des Behälters,
- Fig. 6: eine Draufsicht des Behälters.

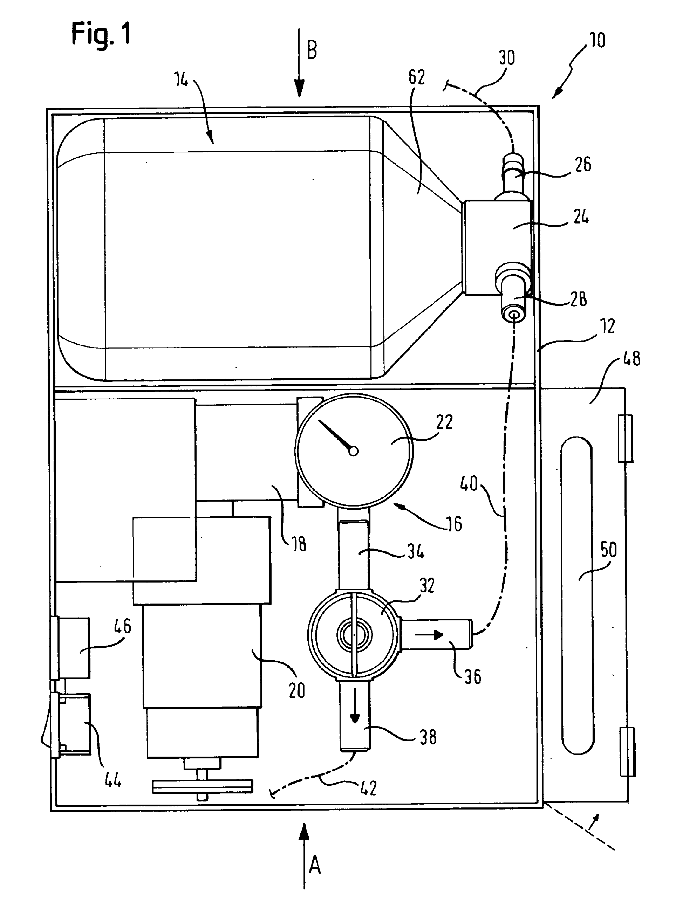

Die Fig. 1 bis 3 zeigen eine in Gebrauchslage angeordnete erfindungsgemäße Vorrichtung 10, welche ein Gehäuse 12 aufweist. Im Gehäuse 12 ist ein Behälter 14 mit Abdichtmittel liegend angeordnet. Das Gehäuse 12 beinhaltet ferner eine Kompressoreinheit 16, welche einen Kompressor 18 und einen Elektromotor 20 als Antrieb für den Kompressor 18 umfasst. Die Kompressoreinheit 16 hat ferner ein Manometer 22 zur Anzeige des mit dem Kompressor 18 erzeugten Luftdrucks. Das Manometer 22 ist so im Gehäuse angeordnet, dass es, beispielsweise aufgrund einer Aussparung in der in Gebrauchslage oben liegenden Gehäusewand von außen einsehbar ist, um ein Ablesen des Manometers 22 zu ermöglichen.

Der Behälter 14 weist einen abgekröpften Bereich 62 auf, an dem eine Entnahmeeinheit 24 angeordnet ist. Die Entnahmeeinheit 24 weist einen ersten Anschlussstutzen 26 und einen zweiten Anschlussstutzen 28 auf, die um 180° versetzt zueinander an der Entnahmeeinheit 24 angeordnet sind. Der erste Anschlussstutzen 26 ist mit einem Ende eines Schlauchs 30 verbunden. Das andere, nicht dargestellte Ende des Schlauchs 30 weist ein entsprechendes Anschlussstück zum Anschließen des Schlauchs 30 an ein Reifenventil, beispielsweise eine sogenannte VG8-Verschraubung, auf.

Die Vorrichtung 10 umfasst des Weiteren ein Umschaltventil 32, das einen ersten Anschluss 34, einen zweiten Anschluss 36 und einen dritten Anschluss 38 aufweist. Der erste Anschluss 34 des Umschaltventils 32 ist mit dem Luftausgang des Kompressors 18 verbunden. Der zweite Anschluss 36 ist über einen ersten Luftzuführschlauch 40 mit dem zweiten Anschlussstutzen 28 der Entnahmeeinheit 24 verbunden. Schließlich ist der dritte Anschluss 38 des Umschaltventils 32 mit einem Ende eines zweiten Luftzuführschlauchs 42 verbunden, dessen anderes, ebenfalls nicht dargestelltes Ende ein Anschlussstück, beispielsweise wiederum eine sogenannte VG8-Verschraubung, zum Anschließen des zweiten Luftzuführschlauchs 42 an ein Reifenventil aufweist.

Die Kompressoreinheit 16 umfasst außerdem ein elektrisches Anschlusskabel 56, über das die Kompressoreinheit mit elektrischer Energie, beispielsweise von einem Zigarrenanzünder eines Kraftfahrzeugs, versorgt werden kann. Nach Anschluss dieses Anschlusskabels 56 an beispielsweise den Zigarrenanzünder kann der Elektromotor 20 zum Antreiben des Kompressors 18 durch Betätigung eines im Gehäuse eingelassenen Schalters 44 aktiviert werden. Im Gehäuse ist ferner eine Anzeige 46, insbesondere eine LED-Anzeigeleuchte, angeordnet, um den Betriebszustand des Elektromotors 20 anzuzeigen und um den Arbeitsbereich um den Reifen auszuleuchten.

Nach Aktivierung des Elektromotors 20 erzeugt der Kompressor 18 an seinem Ausgang einen Luftstrom, der je nach Einstellung des Umschaltventils 32 entweder vom ersten Anschluss 34 in den zweiten Anschluss 36 oder aber in den dritten Anschluss 38 geleitet wird. Gelangt der Luftstrom in den zweiten Anschluss 36, so wird dieser über den ersten Luftzuführschlauch 40 und den zweiten Anschlussstutzen 28 in den Behälter 14, der das Abdichtmittel für einen Reifen enthält, eingeblasen. Durch den dadurch entstehenden Druckanstieg im Behälter wird das Abdichtmittel zusammen mit der Luft über den ersten Anschlussstutzen 26 und den Schlauch 30 in einen am Ende des Schlauchs 30 angeschlossenen undichten Reifen eingeblasen, um diesen Reifen abzudichten. Anschließend kann der Reifen auf diesem Weg mit Luft aufgeblasen werden, um den vorgeschriebenen Reifendruck einzustellen.

Wird das Umschaltventil 32 so eingestellt, dass die Luft dem dritten Anschluss 38 zugeführt wird, so kann damit direkt ein am anderen Ende des zweiten Luftzuführschlauchs 42 angeschlossener Reifen mit Luft aufgepumpt werden, ohne dass diesem Abdichtmittel zugeführt wird.

Wie weiter oben erwähnt, ist der Behälter 14 in Gebrauchslage der Vorrichtung 10 liegend im Gehäuse 12 angeordnet, so dass die Gehäusehöhe besonders flach ausgebildet sein kann. Das Gehäuse 12 kann beispielsweise eine Höhe von weniger als 70 mm aufweisen, obwohl alle wesentlichen Komponenten der erimdungsgemäßen Vorrichtung 10 in dem Gehäuse 12 untergebracht werden können.

Als Zugang zum Inneren des Gehäuses 12 kann ein seitlicher Deckel 48 vorgesehen sein. An dessen Innenseite kann eine T-Halterung 50 zum Aufwickeln des Elektrokabels 56 der Kompressoreinheit 16 angeordnet sein, so dass ein Benutzer der Vorrichtung 10 das Kabel 56 relativ schnell auffindet und damit schnell in die Lage versetzt wird, die erfindungsgemäße Vorrichtung 10 in Betrieb zu nehmen.

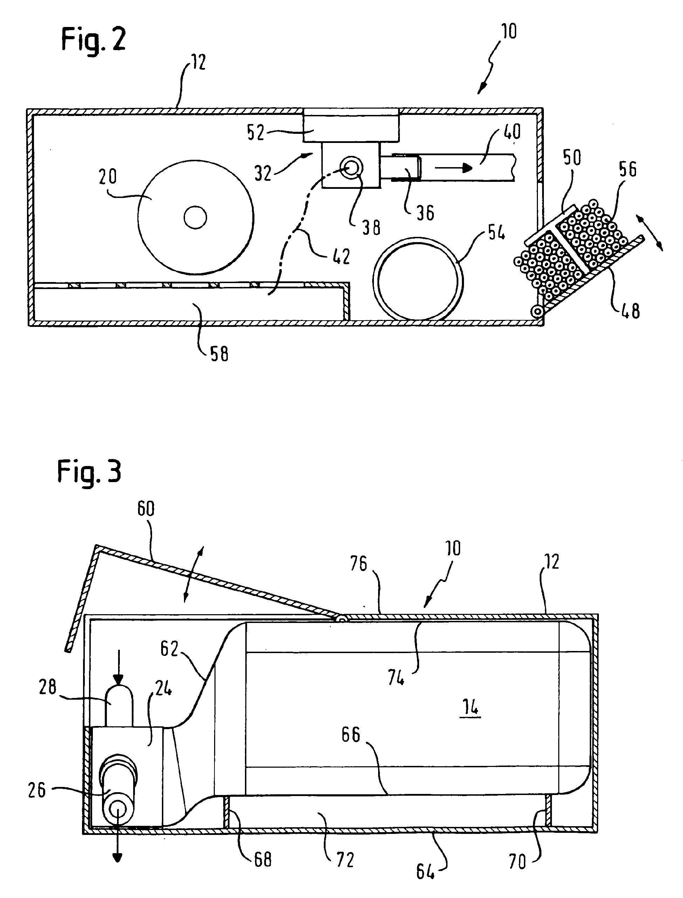

Wie man in Fig. 2 erkennt, weist das Umschaltventil 32 einen Schalter 52 auf, beispielsweise einen Drehschalter, mit dem der vom Kompressor erzeugte Luftstrom wahlweise zu dem zweiten Anschluss 36 oder zu dem dritten Anschluss 38 geleitet werden kann, um entweder einen in Stand zu setzenden Reifen mit Abdichtmittel und Luft zu befüllen oder um einen funktionstüchtigen Reifen direkt mit Luft aus dem Kompressor 18 aufzupumpen.

Wie bereits erwähnt, weist das Gehäuse 12 einen Deckel 48 mit einer T-förmigen Halterung 50 auf, auf der ein Elektrokabel 56 aufwickelbar ist. Ein Ende des Elektrokabels 56 weist einen nicht dargestellten 12 V-Stecker auf, um das Elektrokabel 56 damit an einen Zigarrenanzünder eines Kraftfahrzeugs anzuschließen, so dass der Elektromotor 20 mit elektrischer Energie versorgt werden kann. Für den Stecker des Elektrokabels 56 ist im Gehäuse 12 ein eigenes Aufnahmefach 54 vorgesehen, so dass der Stecker darin einerseits sicher gelagert und andererseits im Falle eines Notfalls schnell nach Öffnen des Deckels 48 vom Benutzer der Vorrichtung 10 greifbar ist.

Ferner ist im Gehäuse 10 ein Aufnahmefach 58 für den zweiten Luftzuführschlauch 42 vorgesehen, so dass auch dieser im Gehäuse 12 sicher gelagert ist.

Wie Fig. 3 zeigt, weist das Gehäuse 12 einen weiteren Deckel 60 auf, um den Behälter 14 aus dem Gehäuse 12 zu entnehmen, insbesondere um einen leeren Behälter gegen einen vollen, mit Abdichtmittel gefüllten Behälter auszutauschen.

Der abgekröpfte Bereich 62 des Behälters 14 weist eine in der Zeichnung nicht erkennbare Öffnung auf, an der die Entnahmeeinheit 24 angeordnet ist. Wie bereits erläutert, kann dem Behälter 14 über den zweiten Anschlussstutzen 28 der Entnahmeeinheit 24 Druckluft aus dem Kompressor 18 zugeführt werden. Ferner kann über den ersten Anschlussstutzen 26 dem Behälter 14 Abdichtmittel entnommen werden. Dabei befindet sich bevorzugt die über den zweiten Anschlussstutzen 28 realisierte Zutrittsöffnung für Druckluft in Gebrauchslage des Behälters 14 über der mittels des ersten Anschlussstutzen 26 realisierten Austrittsöffnung für Abdichtmittel, um eine vollständige Entleerung des Behälters 14 zu ermöglichen. Das heißt, die Anschlussstutzen 26 und 28 verlaufen zur Ebene des Behälterbodens 66 geneigt.

Der Behälter 14 ist derart im Gehäuse 12 angeordnet, dass der abgekröpfte Bereich 62 am Gehäuseboden 64 abgestützt ist. Der Behälterboden 66 ist durch Stege 68 und 70 vom Gehäuseboden 64 so abgestützt, dass der Behälterboden 66 im Wesentlichen parallel zum Gehäuseboden 64 verläuft. Durch die Ausbildung des Behälters 14 mit dem gegenüber dem Behälterboden 66 nach unten abgekröpften Bereich 62 und der liegenden Anordnung des Behälters 14 im Gehäuse 12 ist sichergestellt, dass die Austrittsöffnung für das Abdichtmittel in Gebrauchslage des Behälters 14 unterhalb des Behälterbodens 66 liegt, so dass eine vollständige Entleerung des Behälters 14 gewährleistet wird. Damit wird erreicht, dass die im Behälter 14 gespeicherte Abdichtmasse vollständig in den abzudichtenden Reifen gelangt, um den Reifen abzudichten.

Durch die Anordnung des Behälters 14 im Gehäuse 12 und die Abstützung des Behälterbodens 66 durch die Stege 68 und 70 ergibt sich ferner zwischen den Stegen ein Aufnahmefach 72, das als Staufach für den ersten Luftzuführschlauch 30 vorgesehen ist. Dadurch wird der Platz zwischen dem Gehäuseboden 64 und dem Behälterboden 66 optimal verwendet. Insbesondere lässt sich damit ein Aufnahmefach 72 realisieren, ohne dass das Gehäuse 12 wegen des Aufnahmefachs vergrößert werden muss. Die Kompaktheit des Gehäuses 12 bleibt dadurch erhalten.

Das Gehäuse 12 und der Behälter 14 sind des weiteren so aufeinander abgestimmt, dass die dem Behälterboden 66 gegenüberliegende Behälterwand 74 mit geringem Abstand an der dem Gehäuseboden 64 gegenüberliegenden Gehäusewand 76 angeordnet ist, so dass der Behälter 14 durch die Gehäusewand 76 einerseits und die Stege 68, 70 andererseits sicher eingefasst ist und keine weitere Halterung für den Behälter 14 oder nur eine zusätzliche Halterung, insbesondere eine gabelförmige Halterung an der Entnahmeeinheit 24, notwendig ist, um den Behälter 14 im Gehäuse 12 zu fixieren.

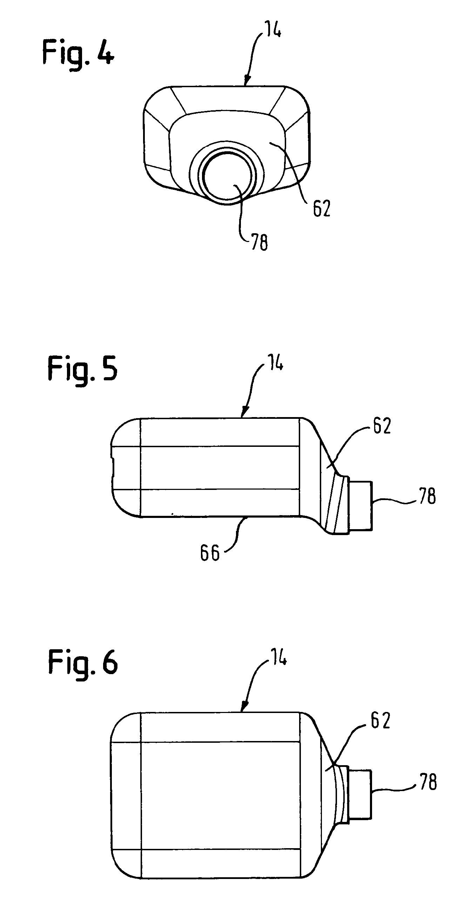

Wie die Fig. 4 bis 6 zeigen, ist an dem Ende des abgekröpften Bereichs 62 des Behälters 14 eine Öffnung 78 vorgesehen, an die die hier nicht gezeigte Entnahmeeinheit 24 anbringbar, insbesondere anschraubbar oder aufsteckbar, ist. Die Entnahmeeinheit 24 weist, wie bereits zuvor erwähnt, einen ersten Anschlussstutzen 26 auf, so dass sich über die Öffnung 78 und den sich bei montierter Entnahmeeinheit 24 anschließenden ersten Anschlussstutzen 26 das im Behälter 14 enthaltene Abdichtmittel entnehmen lässt. Über den zweiten Anschlussstutzen 28 ist Druckluft in die Öffnung 78 und damit in den Behälter 14 einbringbar.

Fig. 4 und 5 zeigen eine Ansicht des Behälters 14, wie er in Gebrauchslage in der Vorrichtung 10 angeordnet ist. Dabei ist zumindest ein Teil der Öffnung 78 unterhalb des Behälterbodens 66 angeordnet. Die hier nicht dargestellte Entnahmeeinheit 24 kann nun so ausgebildet sein, dass der erste Anschlussstutzen 26 und damit die Austrittsöffnung für das Abdichtmittel bei auf der Öffnung 78 montierter Entnahmeeinheit 24 so angeordnet ist, dass er sich unterhalb des Behälterbodens 66 befindet, während sich der zweite Anschlussstutzen 28 für die Luftzufuhr oberhalb des ersten Anschlussstutzens 26 befindet. Damit wird eine vollständige Entleerung des Behälters 14 ermöglicht.

### Bezugszeichenliste

- 10: Vorrichtung
- 12: Gehäuse
- 14: Behälter
- 16: Kompressoreinheit
- 18: Kompressor
- 20: Elektromotor
- 22: Manometer
- 24: Entnahmeeinheit
- 26: erster Anschlussstutzen
- 28: zweiter Anschlussstutzen
- 30: Schlauch
- 32: Umschaltventil
- 34: erster Anschluss
- 36: zweiter Anschluss
- 38: dritter Anschluss
- 40: erster Luftzuführschlauch
- 42: zweiter Luftzuführschlauch
- 44: Schalter
- 46: Anzeige
- 48: Deckel
- 50: Halterung
- 52: Schalter
- 54: Aufnahmefach
- 56: Elektrokabel
- 58: Aufnahmefach
- 60: Deckel
- 62: abgekröpfter Bereich
- 64: Gehäuseboden
- 66: Behälterboden
- 68: Steg
- 70: Steg
- 72: Aufnahmefach
- 74: Behälterwand
- 76: Gehäusewand
- 78: Öffnung

## Patentansprüche

1. Vorrichtung (10) zum Einbringen von Luft und/oder Abdichtmittel in einen Reifen, insbesondere Kraftfahrzeugreifen, mit einem Behälter (14) für das Abdichtmittel, insbesondere eine Flasche, einem mit dem Behälter verbundenen oder verbindbaren Druckerzeugungsmittel (18), insbesondere eine elektrische Pumpe oder ein Kompressor, zum Entleeren des Behälters, gegebenenfalls einem elektrischen Anschlusskabel (56) für das Druckerzeugungsmittel (18), welches an seinem Ende ein Verbindungselement, insbesondere Stecker, aufweist zur Verbindung des Anschlusskabels (56) mit einer Stromversorgung, insbesondere dem Zigarrenanzünder eines Kraftfahrzeuges, einem mit dem Behälter (14) verbundenen oder verbindbaren Schlauch (30) für die Luft und/oder das Abdichtmittel, dessen anderes Ende mit dem zu befüllenden Reifen verbindbar ist und einem Gehäuse (12) zur Aufnahme mindestens eines Teils der Vorrichtungsbestandteile, wobei der Behälter (14) in Gebrauchslage der Vorrichtung (10) liegend im Gehäuse (12) angeordnet ist, **dadurch gekennzeichnet, dass**
der Behälter (14) eine Austrittsöffnung (26) für das Abdichtmittel aufweist, die derart am Behälter (14) angeordnet ist, dass sich die Austrittsöffnung (26) in Gebrauchslage des Behälters (14) unterhalb des Behälterbodens (66) befindet.

2. Vorrichtung nach Anspruch 1,
**dadurch gekennzeichnet, dass**
die Austrittsöffnung (26) in einem abgekröpften Bereich (62) des Behälters (14) angeordnet ist und der Behälter (14) in Gebrauchsstellung derart liegend im Gehäuse (12) angeordnet ist, dass sich der abgekröpfte Bereich (62) am Gehäuseboden (64) abstützt und der Behälterboden (66) in einem Abstand, der der Höhe der Abkröpfung entspricht, parallel zum Gehäuseboden (64) angeordnet ist.

3. Vorrichtung nach zumindest einem der vorstehenden Ansprüche, **dadurch gekennzeichnet, dass**
die dem Behälterboden (66) gegenüberliegende Behälterwand (74) mit geringem Abstand an der dem Gehäuseboden (64) gegenüberliegenden Gehäusewand (76) angeordnet ist.

4. Vorrichtung nach Anspruch 2 oder 3,
**dadurch gekennzeichnet, dass**
der Behälter (14) im abgekröpften Bereich (62) eine Zutrittsöffnung (28) für Druckluft aufweist, wobei in Gebrauchslage des Behälters die Zutrittsöffnung (28) oberhalb der Austrittsöffnung (26) des Behälters (62) für das Abdichtmittel angeordnet ist.

5. Vorrichtung nach zumindest einem der vorstehenden Ansprüche, **dadurch gekennzeichnet, dass**
eine, bevorzugt lösbar mit dem Behälter (14) verbundene, insbesondere auf den Behälter (14) aufschraubbare, Entnahmeeinheit (24) im Gehäuse (12) vorgesehen ist, die einen ersten Anschlussstutzen (26) für die Entnahme des Abdichtmittels aus dem Behälter (14) und einen zweiten Anschlussstutzen (28) zur Zuführung von Druckluft aufweist, wobei der erste Anschlussstutzen (26) insbesondere um 180° versetzt zum zweiten Anschlussstutzen (28) an der Entnahmeeinheit (24) angeordnet ist.

6. Vorrichtung nach Anspruch 5,
**dadurch gekennzeichnet, dass**
das Gehäuse (12) eine gabelförmige Halterung für die Entnahmeeinheit (24) aufweist und der mit der Entnahmeeinheit (24) verbundene Behälter (14) mittels der gabelförmigen Halterung am Gehäuse (12) fixiert ist.

7. Vorrichtung nach zumindest einem der vorstehenden Ansprüche, **dadurch gekennzeichnet, dass**
das Gehäuse (12) einen Deckel (60) zum Einbringen und zum Entnehmen des Behälters (14) aufweist.

8. Vorrichtung nach zumindest einem der vorstehenden Ansprüche, **dadurch gekennzeichnet, dass**
das Gehäuse (12) ein Aufnahmefach (72) zwischen dem Behälterboden (66) und dem Gehäuseboden (64) für den Schlauch (30) zur Befüllung eines Reifens mit Abdichtmittel aufweist.

9. Vorrichtung nach Anspruch 8,
**dadurch gekennzeichnet, dass**
im Aufnahmefach (72) für den Schlauch (30) eine Halterung für ein Schlauchanschlussstück zum Anschließen des Schlauchs (30) an ein Reifenventil, insbesondere eine sogenannte VG8-Verschraubung, vorgesehen ist.

10. Vorrichtung nach zumindest einem der vorstehenden Ansprüche, **dadurch gekennzeichnet, dass**
das Gehäuse (12) einen über einen Deckel (48) verschließbaren Aufnahmeraum für das elektrische Anschlusskabel (56) aufweist, wobei auf der Innenseite des Deckels (48) eine insbesondere T-förmige Halterung (50) zum Aufwickeln des Anschlusskabels (56) vorgesehen ist.

11. Vorrichtung nach zumindest einem der vorstehenden Ansprüche, **dadurch gekennzeichnet, dass**
das Druckerzeugungsmittel, insbesondere die Pumpe oder der Kompressor (18), über einen ersten Luftzuführschlauch (40) mit dem Behälter (14) verbunden oder verbindbar ist, um dem Behälter (14) Druckluft zuzuführen.

12. Vorrichtung nach Anspruch 11,
**dadurch gekennzeichnet, dass**
das Druckerzeugungsmittel, insbesondere die Pumpe oder der Kompressor (18), mit einem zweiten Luftzuführschlauch (42) verbunden oder verbindbar ist, um einen Reifen direkt mit Luft aufzublasen.

13. Vorrichtung nach Anspruch 12,
**dadurch gekennzeichnet, dass**
ein Umschaltventil (32) vorgesehen ist zum Umschalten des erzeugten Luftstroms zwischen dem ersten Luftzuführschlauch (40) und dem zweiten Luftzuführschlauch (42), so dass wahlweise die Vorrichtung zum direkten Aufpumpen eines Reifens oder zum Abdichten und anschließenden Aufpumpen des Reifens über den Behälter (14) verwendbar ist.

## Claims

1. An apparatus (10) for introducing air and/or sealant into a tyre, in particular into a motor vehicle tyre, having a container (14) for the sealant, in particular a bottle, having a pressure generating means (18) connected or connectable to the container, in particular an electric pump or a compressor, for emptying the container, optionally having an electrical connection cable (56) for the pressure generating means (18) which has a connection element, in particular a plug, at its end for connecting the connection cable (56) to a power supply, in particular to the cigarette lighter of a motor vehicle, having a hose (30) connected or connectable to the container (14) for the air and/or for the sealant whose other end is connectable to the tyre to be filled, and having a housing (12) for receiving at least some of the apparatus components, wherein the container (14) is arranged lying in the housing (12) in the position of use of the apparatus (10),
**characterised in that**
the container (14) has an outlet opening (26) for the sealant which is arranged at the container (14) such that the outlet opening (26) is located beneath the container base (66) in the position of use of the container (14).

2. An apparatus in accordance with claim 1,
**characterised in that**
the outlet opening (26) is arranged in a cranked region (62) of the container (14) and the container (14) is arranged lying in the housing (12) in the position of use such that the cranked region (62) is supported at the housing base (64) and the container base (66) is arranged in parallel with the housing base (64) at a spacing which corresponds to the height of the cranked section.

3. An apparatus in accordance with at least one of the preceding claims,
**characterised in that**
the container wall (74) disposed opposite the container base (66) is arranged with a slight spacing at the housing wall (76) disposed opposite the housing base (64).

4. An apparatus in accordance with claim 2 or claim 3, **characterised in that**
the container (14) has an inlet opening (28) for compressed air in the cranked region (62), with the inlet opening (28) being arranged above the outlet opening (26) of the container (62) for the sealant in the position of use of the container.

5. An apparatus in accordance with at least one of the preceding claims,
**characterised in that**
an extraction unit (24) is provided in the housing (12), the extraction unit preferably being releasably connected to the container (14), in particular screwable to the container (14), and having a first connection stub (26) for the extraction of the sealant from the container (14) and a second connection stub (28) for the supply of compressed air, with the first connection stub (26) in particular being arranged offset by 180° with respect to the second connection stub (28) at the extraction unit (24).

6. An apparatus in accordance with claim 5,
**characterised in that**
the housing (12) has a fork-like holder for the extraction unit (24) and the container (14) connected to the extraction unit (24) is fixed to the housing (12) by means of the fork-shaped holder.

7. An apparatus in accordance with at least one of the preceding claims,
**characterised in that**
the housing (12) has a cover (60) for the introduction and removal of the container (14).

8. An apparatus in accordance with at least one of the preceding claims,
**characterised in that**
the housing (12) has a reception compartment (72) between the container base (66) and the housing base (64) for the hose (30) for the filling of a tyre with sealant.

9. An apparatus in accordance with claim 8,
**characterised in that**
a holder for a hose connector piece is provided in the reception compartment (72) for the hose (30) for the connection of the hose (30) to a tyre valve, in particular a so-called VG8 screw connection.

10. An apparatus in accordance with at least one of the preceding claims, **characterised in that**
the housing (12) has a reception space for the electrical cable (56) which can be closed via a cover (48), with a holder (50), in particular of T shape, being provided at the inside of the cover (48) for the winding up of the connection cable (56).

11. An apparatus in accordance with at least one of the preceding claims,
**characterised in that**
the pressure generating means, in particular the pump or the compressor (18) is connected or connectable to the container (14) via a first air supply hose (40) to supply compressed air to the container (14).

12. An apparatus in accordance with claim 11,
**characterised in that**
the pressure generating means, in particular the pump or the compressor (18), is connected or connectable to a second air supply hose (42) to directly inflate a tyre with air.

13. An apparatus in accordance with claim 12,
**characterised in that**
a switch valve (32) is provided for the switching of the generated air flow between the first air supply hose (40) and the second air supply hose (42) so that the apparatus can selectively be used for the direct pumping up of a tyre or for the sealing and subsequent pumping up of the tyre via the container (14).

## Revendications

1. Dispositif (10) pour introduire de l'air et/ou un agent d'étanchement dans un pneumatique, en particulier un pneumatique de véhicule automobile, comprenant un récipient (14) pour l'agent d'étanchement, en particulier une bouteille, un moyen de génération de pression (18) relié ou susceptible d'être relié au récipient, en particulier une pompe électrique ou un compresseur, destiné à vider le récipient, le cas échéant un câble de raccordement électrique (56) pour le moyen de génération de pression (18) qui comprend à son extrémité un élément de connexion, en particulier une prise mâle, pour relier le câble de raccordement (56) à une alimentation électrique, en particulier l'allume-cigare d'un véhicule automobile, comprenant un tuyau (30) relié ou susceptible d'être relié au récipient (14) pour l'air et/ou l'agent d'étanchement, dont l'autre extrémité est susceptible d'être reliée au pneumatique à remplir, et comprenant un boîtier (12) pour loger au moins une partie des éléments constitutifs du dispositif, dans lequel le récipient (14) est agencé posé dans le boîtier (12) dans la situation d'utilisation du dispositif (10),
**caractérisé en ce que**
le récipient (14) comporte une ouverture de sortie (26) pour l'agent d'étanchement, laquelle est agencée sur le récipient (14) de telle manière que l'ouverture de sortie (26) se trouve au-dessous du fond (66) du récipient dans la situation d'utilisation du récipient (14).

2. Dispositif selon la revendication 1,
**caractérisé en ce que** l'ouverture de sortie (26) est agencée dans une zone coudée (62) du récipient (14) et le récipient (14) est agencé posé dans le boîtier (12), dans la situation d'utilisation, de telle façon que la zone coudée (62) s'appuie sur le fond (64) du boîtier et le fond (66) du récipient est agencé parallèlement au fond (64) du boîtier à une distance qui correspond à la hauteur du coudage.

3. Dispositif selon l'une au moins des revendications précédentes, **caractérisé en ce que** la paroi du récipient (74) à l'opposé du fond (66) du récipient est agencée à faible distance sur la paroi (76) du boîtier opposée au fond (64) du boîtier.

4. Dispositif selon la revendication 2 ou 3,
**caractérisé en ce que** le récipient (14) comporte, dans la zone coudée (62), une ouverture d'admission (28) pour de l'air comprimé, et l'ouverture d'admission (28) est agencée, dans la situation d'utilisation du récipient, au-dessus de l'ouverture de sortie (26) du récipient (14) pour l'agent d'étanchement.

5. Dispositif selon l'une au moins des revendications précédentes, **caractérisé en ce qu'**il est prévu dans le boîtier (12) une unité de prélèvement (24) reliée de préférence de façon détachable avec le récipient (14), en particulier susceptible d'être vissée sur le récipient (14), laquelle comprend une première pipe de raccordement (26) pour le prélèvement de l'agent détachement hors du récipient (14) et une seconde pipe de raccordement (28) pour l'admission d'air comprimé, dans lesquelles la première pipe de raccordement (26) est agencée en particulier avec un décalage de 180° par rapport à la seconde pipe de raccordement (28) sur l'unité de prélèvement (24).

6. Dispositif selon la revendication 5,
**caractérisé en ce que** le boîtier (12) comprend une monture en forme de fourche pour l'unité de prélèvement (24), et le récipient (14) relié à l'unité de prélèvement (24) est fixé sur le boîtier (12) au moyen de la monture en forme de fourche.

7. Dispositif selon l'une au moins des revendications précédentes, **caractérisé en ce que** le boîtier (12) comprend un couvercle (60) pour l'introduction et pour l'enlèvement du récipient (14).

8. Dispositif selon l'une au moins des revendications précédentes, **caractérisé en ce que** le boîtier (12) comprend un logement de réception (72) entre le fond (66) du récipient et le fond (64) du boîtier pour le tuyau (30) destiné au remplissage d'un pneumatique avec l'agent d'étanchement.

9. Dispositif selon la revendication 8,
**caractérisé en ce qu'**il est prévu dans le logement de réception (72) pour le tuyau (30) une monture pour une pièce de raccordement destinée au raccordement du tuyau (30) sur une valve du pneumatique, en particulier une pièce vissée dite VG8.

10. Dispositif selon l'une au moins des revendications précédentes, **caractérisé en ce que** le boîtier (12) comprend un compartiment de réception susceptible d'être refermé par un couvercle (48), pour le câble de raccordement électrique (56), et sur le côté intérieur du couvercle (48) il est prévu une monture (50), en particulier en forme de T, pour l'enroulement du câble de raccordement (56).

11. Dispositif selon l'une au moins des revendications précédentes, **caractérisé en ce que** le moyen de génération de pression, en particulier la pompe ou le compresseur (18) est relié ou susceptible d'être relié au récipient (14) via un premier tuyau d'admission d'air (40), afin d'admettre de l'air comprimé dans le récipient (14).

12. Dispositif selon la revendication 11,
**caractérisé en ce que** le moyen de génération de pression, en particulier la pompe ou le compresseur (18) est relié ou susceptible d'être relié à un second tuyau d'admission d'air (42) afin de gonfler un pneumatique directement avec de l'air.

13. Dispositif selon la revendication 12,
**caractérisé en ce qu'**il est prévu une valve d'inversion (32) pour inverser le flux d'air engendré entre le premier tuyau d'admission d'air (40) et le second tuyau d'admission d'air (42), de sorte que le dispositif est utilisable au choix pour gonfler directement un pneumatique, ou bien pour étancher et ensuite gonfler le pneumatique via le récipient (14).
